# EUROPÄISCHE PATENTANMELDUNG

(11) **EP 1 174 822 A1**
(43) Veröffentlichungstag der Anmeldung: **23.01.2002**
(21) Anmeldenummer: 00810655.1
(22) Anmeldetag: 21.07.2000
(51) Int. Cl.: G06K 19/077

(54) **Verfahren zur Herstellung eines Kunststoffobjektes**

(71) Anmelder: Sempac SA, 6330 Cham (CH)
(72) Erfinder: Truckenbrod, Willi, 6300 Zug (CH); Bauer, Willy August, 6315 Oberägeri (CH)
(74) Vertreter: Falk, Urs, Dr.

(57) **Zusammenfassung**

Bei der Herstellung eines Kunststoffobjektes, das einen Halbleiterchip (5) oder ein anderes elektronisches Bauteil sowie an einer Aussenseite freiliegende Kontaktflächen (7) aufweist, wird ein vorgefertigtes Elektronikmodul, das den auf einer Leiterplatte (6) montierten Halbleiterchip (5) enthält, in einem durch eine erste und eine zweite Formhälfte (3, 4) gebildeten Formhohlraum (2) innerhalb eines Halbraumes (12), der durch mindestens einen von der unteren Formhälfte (3) vorstehenden Steg (11) definiert wird, spielfrei zu plazieren oder sogar leicht darin einzuklemmen. Der Steg (11) ist im wesentlichen so hoch wie die Leiterplatte (6) dick ist. Beim nachfolgenden Einbringen, vorzugsweise Einspritzen, des Kunststoffes nimmt der Steg (11) den Aufprall des unter grosser Geschwindigkeit einströmenden Kunststoffes auf und schützt das Elektronikmodul (1) davor, aus seiner Lage verschoben zu werden.

## Beschreibung

Die Erfindung betrifft ein Verfahren zur Herstellung eines Kunststoffobjektes, das einen Halbleiterchip und/oder ein elektronisches Bauteil und in eine Aussenseite integrierte, freiliegende Kontakte aufweist.

Kunststoffobjekte, beispielsweise sogenannte Multimediakarten oder SIM-Karten, die in Mobiltelefonen verwendet werden, bestehen aus einem flachen Kunststoffgehäuse, an dessen einer Oberfläche elektrische Kontaktflächen freiliegen. Im Inneren des Kunststoffgehäuses ist ein Halbleiterchip eingebettet, der elektrisch mit den freiliegenden Kontaktflächen verbunden ist. Bei der Herstellung solcher Multimediakarten wird der Halbleiterchip zunächst auf einem Substrat montiert und mittels extrem feinen Drähten elektrisch mit dem Substrat verbunden. Für die weitere Verarbeitung zur fertigen Multimediakarte sind verschiedene Verfahren bekannt:

Bei einem ersten Verfahren dient eine Leiterplatte als Substrat. Der montierte und verdrahtete Halbleiterchip wird durch Aufbringen eines sogenannten Globtopes mit Kunststoff umhüllt, um die Drähte gegen mechanische Beschädigungen und Kurzschlüsse zu schützen. Die Leiterplatte wird zusätzlich mit elektronischen Bauteilen, beispielsweise Kondesatoren. bestückt und anschliessend in die Ausnehmung eines vorgespritzten Kunststoffkörpers eingelegt und durch Kleben oder mittels Ultraschall in der Ausnehmung fixiert. Schliesslich wird über der Leiterplatte noch eine Etikette angebracht, so dass die Leiterplatte zwischen dem Kunststoffkörper und der Etikette eingebettet ist und nur noch die elektrischen Kontaktflächen an der Oberfläche der Multimediakarte freiliegen.

Bei einem weiteren Verfahren dient ein metallisches, teilweise mit einer Folie überzogenes Leadframe als Substrat. Der montierte und verdrahtete Halbleiterchip wird durch Transfer-Molden in einer Umhüllung aus Kunststoff eingebettet. Nach dem Molden wird der umhüllte Halbleiterchip aus dem Leadframe freigestanzt: Auf diese Weise entsteht als Halbzeug ein sogenanntes Elektronikmodul. Anschliessend wird das Elektronikmodul gemäss der Lehre des europäischen Patents EP 399 868 B1 im Spritzgussverfahren mit Plastikmaterial zur fertigen Multimediakarte umspritzt. Der Beschriftung dienende Etiketten können bei diesem Spritzgussvorgang gleich mit aufgebracht werden. Für Multimediakarten, bei denen sich die freiliegenden Kontaktflächen nicht über, sondern neben dem Halbleiterchip befinden, ist mit der DE 196 25 228 eine Weiterentwicklung dieses Verfahrens bekannt geworden, bei dem das Leadframe so gestaltet ist, dass die freiliegenden Kontaktflächen während des Spritzgussvorgangs gegen die Wand der Spritzgussform gedrückt werden.

Bei einem weiteren bekannten Verfahren wird als Substrat eine flexible Leiterplatte verwendet und der montierte und verdrahtete Halbleiterchip wird durch Transfer-Molden in einer Umhüllung aus Kunststoff eingebettet und dann zu einem flachen Elektronikmodul freigestanzt. Die eine Flachseite des Elektronikmoduls ist dabei vollständig mit den freiliegenden Kontaktflächen bedeckt. Anschliessend wird das Elektronikmodul in die Ausnehmung eines vorgespritzten Kunststoffkörpers eingelegt und durch Kleben in der Ausnehmung fixiert.

Der Erfindung liegt die Aufgabe zugrunde, die Herstellung derartiger Kunststoffobjekte weiter zu vereinfachen.

Die Erfindung besteht in den im Anspruch 1 angegebenen Merkmalen. Vorteilhafte Ausgestaltungen ergeben sich aus den abhängigen Ansprüchen.

Die Lösung der Aufgabe besteht erfindungsgemäss darin, ein vorgefertigtes Elektronikmodul, das den auf einer Leiterplatte montierten Halbleiterchip enthält, in einem durch eine erste und eine zweite Formhälfte gebildeten Formhohlraum innerhalb eines Halbraumes, der durch mindestens einen von der unteren Formhälfte vorstehenden Steg definiert wird, spielfrei zu plazieren oder sogar leicht darin einzuklemmen. Der Steg ist im wesentlichen so hoch wie die Leiterplatte dick ist. Beim nachfolgenden Spritzgiessen nimmt der Steg den Aufprall des unter grosser Geschwindigkeit einströmenden Kunststoffes auf und schützt das Elektronikmodul davor, aus seiner Lage verschoben zu werden. Unter Umständen kann der Steg auch weniger hoch sein als die Leiterplatte dick ist, sofern er die Schutzwirkung noch erbringt.

Nachfolgend werden Ausführungsbeispiele der Erfindung anhand der Zeichnung näher erläutert, wobei sich verschiedene Ausführungsbeispiele auch kombinieren lassen.

Es zeigen:
- Fig. 1, 2: den Hohlraum einer Spritzgussform, in dem ein Elektronikmodul plaziert ist, in seitlicher Ansicht und in Aufsicht, und
- Fig. 3 - 5: weitere Varianten der Spritzgussform.

### Ausführungsbeispiel 1

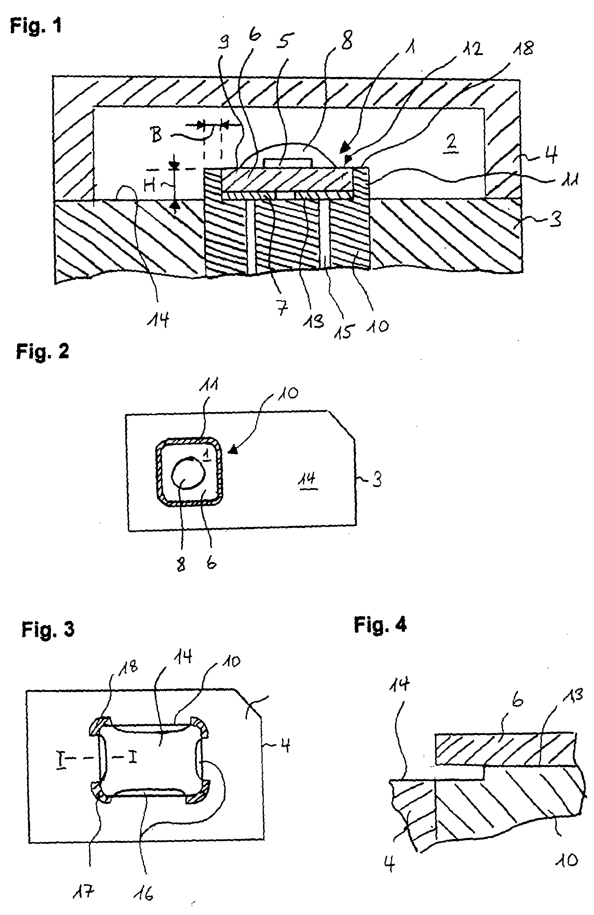

Die Fig. 1 zeigt schematisch in nicht massstabsgetreuer Darstellung ein Elektronikmodul 1, das im Hohlraum 2 einer durch eine untere und eine obere Formhälfte 3, 4 (oder eine linke und eine rechte Formhälfte) gebildeten Spritzgussform plaziert ist. Das Elektronikmodul 1 besteht aus einer mit einem Halbleiterchip 5 oder einem anderen elektronischen Bauteil bestückten Leiterplatte 6. Die Leiterplatte 6 besteht bevorzugt aus einem flexiblen Material, auch als Flextape bekannt, kann aber auch aus einem starren Material bestehen. Die Leiterplatte 6 weist auf der der unteren Formhälfte 3 zugewandten Seite elektrische, üblicherweise vergoldete, Kontaktflächen 7 auf, die als Aussenkontakte des fertigen Kunststoffobjektes dienen. Der Halbleiterchip 5, der montiert und verdrahtet oder als Flipchip montiert ist, ist in einen sogenannten Gloptop 8 oder in ein beispielsweise im Transfer-Mold Verfahren hergestelltes Kunststoffgehäuse eingebettet. Die Rückseite 9 der Leiterplatte 6 kann, fakultativ, mit Klebstoff beschichtet oder mit einer Klebstofffolie versehen sein, um die Haftung zwischen der Leiterplatte 6 und dem Kunststoff des fertigen Kunststoffobjektes zu erhöhen. Als Klebstoff wird bevorzugt ein thermisch oder mittels Druck aktivierbarer Klebstoff verwendet. Die untere Formhälfte 3 weist einen Einsatz 10 mit einem umlaufenden vorstehenden Steg 11 auf, wodurch ein gegen oben, d.h. zum Hohlraum 2 hin, offener Halbraum 12 gebildet wird. Der Boden 13 des Einsatzes 10 ist bündig mit dem Boden 14 der unteren Formhälfte 3. Die Höhe H des Stegs 11 ist gleich der Dicke der Leiterplatte 6. Die Breite B des Stegs 11 beträgt nur wenige Hunderstel oder Zehntel Millimeter. Wenn die Leiterplatte 6 zum Vergiessen in die Spritzgussform eingelegt ist, füllt sie den Halbraum 12 aus, wobei ihre Kontaktflächen 7 dem Boden 13 des Halbraumes 12 zugewandt sind.

Die Fig. 2 zeigt in Aufsicht die untere Formhälfte 3 mit dem Einsatz 10. Der Steg 11 des Einsatzes 10 ist so dimensioniert, dass die Leiterplatte 6 des Elektronikmoduls 1 spielfrei aufgenommen und gehalten ist. Die inneren Seitenlängen des Stegs 11 können sogar um einige Hundertstel Millimeter kleiner als die Seitenlängen der Leiterplatte 6 des Elektronikmoduls 1 bemessen sein. Beim Einsetzen des Elektronikmoduls 1 mittels eines Roboters verbiegt sich dann die Leiterplatte 6 leicht. Der Steg 11 kann auch schräg gegen das Innere des Halbraumes 12 gerichtet sein, um die Fixierung des Elektronikmoduls 1 zu verstärken. Zudem kann der Einsatz 10 mit Bohrungen 15 (Fig. 1) versehen sein, die mit Vakuum beaufschlagbar sind, um das Elektronikmodul 1 zusätzlich mittels Vakuum am Boden 13 zu fixieren.

Das Vergiessen des Elektronikmoduls 1 zum fertigen Kunststoffobjekt erfolgt gemäss den folgenden Schritten:
- 1.: Plazieren des Elektronikmoduls 1 innerhalb des durch den Steg 11 und den Boden 14 des Einsatzes 10 der unteren Formhälfte 3 gebildeten Halbraumes 12.
- 2.: Fakultativ, Fixieren des Elektronikmoduls 1 durch Anlegen von Vakuum an die Bohrungen 15 des Einsatzes 10.
- 3.: Schliessen der beiden Formhälften 3 und 4 und Einbringen von Kunststoff, beispielsweise durch Einspritzen von Kunststoff wie z.B. ABS, in den Formhohlraum. Diese Art von Umspritzen wird im Fachjargon Spritzgiessen genannt. Für das Einbringen des Kunststoffes können auch andere Technologien verwendet werden, wie z.B. Schäumen oder Giessen.

Beim Umspritzen des Elektronikmoduls 1 verhindert der umlaufende Steg 11 des Einsatzes 10, dass der unter hoher Geschwindigkeit einströmende Kunststoff das Elektronikmodul 1 verschieben kann. Beim Füllen und Nachpressen wird das Elektronikmodul 1 gegen den Boden 14 des Einsatzes 10 gedrückt, so dass die Aussenkontakte des fertigen Kunststoffobjektes plan und bündig zur Oberfläche des Kunststoffobjektes sind. Das fertige Kunststoffobjekt weist zwar einen die Aussenkontakte umgebenden Spalt auf, der aber kaum wahrnehmbar ist.

### Ausführungsbeispiel 2

Bei diesem Ausführungsbeispiel ist der Steg 11 des Einsatzes 10 nicht mehr wie beim ersten Ausführungsbeispiel als ununterbrochene, umlaufende Berandung ausgeführt. Der umlaufende Steg 11 ist durch mehrere getrennte Stege ersetzt, beispielsweise vier, die beispielsweise die Ecken des eingelegten Elektronikmoduls 1 umranden.

### Ausführungsbeispiel 3

Dieses in der Fig. 3 illustrierte Ausführungsbeispiel stellt eine Weiterentwicklung des Ausführungsbeispiels 2 dar, bei der der Boden 13 des Einsatzes 10 bzw. des Halbraumes 12, mit Ausnahme von vier Randbereichen 16, gegenüber dem Boden 14 der unteren Formhälfte 3 um eine Distanz D von einigen Hunderstel oder Zehntel Millimetern, typischerweise um 0.05 bis 0.1 Millimeter, erhöht ist. Die vier Randbereiche 16 weisen die gleiche Höhe wie der Boden 14 der unteren Formhälfte 3 auf, d.h. sie verlaufen bündig mit dem Boden 14. Die Randbereiche 16 haben die Form schmaler Streifen, die parallel zu den Kanten des Elektronikmoduls 1 und zwischen den Stegen 17 verlaufen und deren Ecken, wie in der Fig. 3 dargestellt ist, abgerundet sind. Beim Umspritzen des Elektronikmoduls 1 werden diese Randbereiche 16 mit Kunststoff gefüllt. Daraus ergibt sich zusätzlich eine mechanische Fixierung des Elektronikmoduls 1 im fertigen Kunststoffobjekt. Die Fig. 4 zeigt einen Schnitt entlang der Linie 1-1 der Fig. 3.

Da der Boden 13 des Halbraumes 12, mit Ausnahme der Randbereiche 16, gegenüber dem Boden 14 der unteren Formhälfte 3 um die Distanz D erhöht ist, sollte die Höhe der Stege 17 erhöht werden, so dass die Stirnseite 18 der Stege 17 etwa bündig mit der Rückseite 9 der Leiterplatte 6 ist.

### Ausführungsbeispiel 4

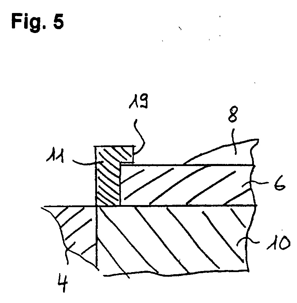

Der Steg 11 kann etwas länger ausgebildet sein als die Leiterplatte 6 des Elektronikmoduls 1 dick ist und wie in der Fig. 5 gezeigt, mindestens eine gegen das Innere des Halbraumes 12 gerichtete vorstehende Zunge 19 aufweisen, so dass das Elektronikmodul 1 nach dem Einsetzen nicht herausfallen kann.

Bei allen Ausführungsbeispielen kann der Einsatz 10 ein auswechselbares Teil sein. Der Einsatz 10 und die untere Formhälfte 3 können aber auch aus einem einzigen Stück gefertigt sein.

## Patentansprüche

1. Verfahren zur Herstellung eines Kunststoffobjektes, das einen Halbleiterchip (5) oder ein anderes elektronisches Bauteil sowie an einer Aussenseite freiliegende Kontaktflächen (7) aufweist, **gekennzeichnet durch** die Schritte:
- Plazieren eines vorgefertigten Elektronikmoduls (1), das den auf einer Leiterplatte (6) montierten Halbleiterchip (5) bzw. das elektronische Bauteil enthält, in einem **durch** eine erste und eine zweite Formhälfte (3, 4) gebildeten Formhohlraum (2) innerhalb eines Halbraumes (12), der **durch** mindestens einen von der ersten Formhälfte (3) vorstehenden Steg (11, 17) gebildet ist, und
- Einbringen von Kunststoff in den Formhohlraum.

2. Verfahren nach Anspruch 1, **dadurch gekennzeichnet, dass** der Halbraum (2) durch getrennte Stege (17) gebildet ist und dass der Boden (14) des Halbraumes (12) gegenüber dem Boden (14) der ersten Formhälfte (3) mit Ausnahme von Randbereichen (16) erhöht ist.

3. Verfahren nach Anspruch 1, **dadurch gekennzeichnet, dass** eine Höhe (H) des Stegs (11) gleich der Dicke der Leiterplatte (6) ist.

4. Verfahren nach Anspruch 2, **dadurch gekennzeichnet, dass** eine Höhe (H) der Stege (17) so bemessen ist, dass eine Stirnseite (18) der Stege (17) bündig mit der Rückseite (9) der Leiterplatte (6) ist.

5. Verfahren nach einem der Ansprüche 1 bis 4, **dadurch gekennzeichnet, dass** das Elektronikmodul (1) mittels Vakuum auf dem Boden (13) des Halbraumes (12) fixiert wird.

6. Verfahren nach einem der Ansprüche 1 bis 5, **gekennzeichnet durch** die Verwendung eines Elektronikmoduls (1), bei dem der Halbleiterchip (5) bzw. das elektronische Bauteil in einem Globtop (8) eingebettet ist.

7. Verfahren nach einem der Ansprüche 1 bis 5, **gekennzeichnet durch** die Verwendung eines Elektronikmoduls (1), bei dem der Halbleiterchip (5) bzw. das elektronische Bauteil in einem Kunststoffgehäuse eingebettet ist.

8. Verfahren nach einem der Ansprüche 1 bis 7, **dadurch gekennzeichnet, dass** die Rückseite (9) der Leiterplatte (6) Klebstoff enthält.
